# EUROPEAN PATENT APPLICATION

(11) **EP 3 118 580 A1**
(43) Date of publication of application: **18.01.2017**
(21) Application number: 15306157.7
(22) Date of filing: 13.07.2015
(51) Int. Cl.: G01C 21/36, G06K 9/00

(54) **SYSTEM AND METHOD FOR RELAYING ROUTE INFORMATION FOR NAVIGATIONAL PURPOSES**

(71) Applicant: Thomson Licensing, 92130 Issy-les-Moulineaux (FR)
(72) Inventor: Zepeda Salvatierra, Joaquin, 35576 Cesson-Sévigné (FR); Babon, Frédéric, 35576 Cesson-Sévigné (FR)
(74) Representative: Huchet, Anne

(57) **Abstract**

An image processor 306 selects images to use to depict a route generated by GPS navigation 304 and generates cognitive cues from the images. A route processor 308 receives the selected images and cognitive cues and generates a route preview representation 318. The image processor 306 can employ image metadata and/or image relationship information to facilitate in determining which images to select. The route processor 308 can also provide alternative routes based on the selected images from the image processor 306.

## Description

### TECHNICAL DOMAIN

The present principles relate to a system and a method for relaying navigational information, and more particularly, to a system and a method for relaying navigational information prior to traveling a route.

### BACKGROUND

Global Positioning Systems (GPS) have become ubiquitous in recent times with standalone models and integrated systems installed in mobile devices such as smartphones. They provide vehicle and/or walking instructions to almost any desired location in the world that is supported by satellites with positioning information. These devices tend to be real-time based systems that require a satellite feed to obtain location information. As the person or vehicle moves, their location is shown on a map on the device. In certain scenarios, the satellite feed may be blocked (e.g., in a major city with skyscraper buildings, etc.) or not available. In these situations, it is helpful if the user has some prior knowledge of a route to aid them in successfully navigating to their desired destination.

### SUMMARY

Additional features enhance personal GPS navigation devices (or other mobile devices integrating the features) in the form of a video preview of a selected route and/or a graphical route preview. A video preview is generated automatically from images in proximity of a route in such a manner that it is didactive in that it points out action points and reference points along the route, varying the playback speed to emphasize these points while keeping the video short. In a similar manner, a graphical route preview can also relay the route information to the user prior to departure. Route points utilized in the video preview and/or graphical preview are selected to enhance a user's cognitive ability to recall the route independent of a GPS device. These features can be used to allow the user to select a more scenic route or one better adapted to the vehicle and/or to dispense altogether of carrying the handheld device (e.g., when using the GPS as an aid to communicate directions to a third party, or when wishing to benefit from fixed-cost home or office Wi-Fi as opposed to costly mobile data charges).

One embodiment includes a system for route navigation that comprises a means for receiving at least one navigation route; a means for processing at least one image and image metadata to select at least one image associated with the navigation route; a means for determining at least one cognitive cue for navigation recall by a user for the at least one image; a means for generating at least one navigation route representation including the at least one cognitive cue; and a means for providing the at least one navigation route representation to a display. The means for processing can further include using user relationship information between a user and one selected from a group of an entity and a subject matter of the image. The user relationship information can be derived from at least one selected from the group of a social network and a user preference. The means for processing can further include a means for determining a weight value for the at least one image. The image metadata can include at least one selected from a group of a number of selections of an image, a number of views of an image, a date of an image, location of an image and a subject matter of an image. The navigation route representation can be one selected from the group of a graphical preview and a preview video. The navigation route representation can include at least one selected from the group of a visual cognitive cue, an auditory cognitive cue and a sensory cognitive cue.

Another embodiment includes a method for route navigation that comprises receiving a navigation route; selecting at least one image in proximity of the route; determining at least one cognitive cue from the at least one selected image; generating at least one route representation using the at least one cognitive cue; and providing the at least one route representation to a display for user preview. Selecting can further include using user relationship information between a user and one selected from a group of an entity and a subject matter of the image. The user relationship information can be derived from at least one selected from a group of a social network and a user preference. Yet another embodiment can further comprise determining a weight value for the at least one selected image. In still yet another embodiment, selecting can further include using image metadata for determining a selection, the metadata including at least one selected from a group of a number of selections of an image, a number of views of an image, a date of an image, location of an image and a subject matter of an image. The navigation route representation in an embodiment can be one selected from a group of a graphical preview and a preview video. The navigation route representation in an embodiment can include at least one selected from a group of a visual cognitive cue, an auditory cognitive cue and a sensory cognitive cue. In still yet another embodiment, the generating of a video preview can be based on a selection of a graphical preview.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 illustrates an example process in accordance with an embodiment of the present principles.
FIG. 2 illustrates an example of display characteristics in accordance with an embodiment of the present principles.
FIG. 3 depicts an example system in accordance with an embodiment of the present principles.
FIG. 4 is a flow diagram of an example method of facilitating navigation by relaying route information to a user through the use of cognitive cues in accordance with an embodiment of the present principles.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

Additional features are provided for navigation devices (or devices such as mobile devices and the like that integrate GPS navigation functionality) in the form of a video preview and/or graphical preview of a selected route. A preview representation of the selected route is created automatically from images in proximity of an initial route determined by a GPS device and the like. Determination of whether an image is in proximity of the route can be made based on, for example, geo-tag information. Geo-tagged images are images (including, but not limited to, photographs, videos, drawings, etc.) with metadata that includes location information. The geographical location data can be in the form of latitude/longitude for a specific map datum, address information such as street number, street, city, town, state, zip code, area code, province, country and the like and/or relative location information such as distances from a known location/point of interest (POI) (e.g., 12 miles southwest of Dodger's stadium, etc.).

A resulting preview representation such as, for example, a video preview facilitates in teaching a user how to navigate the route in that it points out *action points* and *reference points* along the route, varying the playback speed/cursor speed to emphasize these points while minimizing a user's time spent reviewing a route. This allows the user to preview the route or routes and to select a preferred route such as, for example, a more scenic route or one better adapted to a type of vehicle (e.g., a car, a bus, an off-road vehicle, use of public transportation, etc.) and/or the lack of a vehicle (e.g., user is walking). It also allows the user to dispense altogether with carrying a navigation device after previewing the route by enhancing a user's cognitive abilities to recall the route by proper selection of the route points in the preview representation.

In one basic embodiment of the system using a video preview as the preview representation, a system automatically creates a video of route directions from a database of street images to illustrate important reference points and/or action points. The term *reference point* is used to indicate visually important points along the route that help to lower a user's cognitive burden when using a navigation device to learn a route. For example, a large bridge, a lake, a large neon sign and/or a well-known restaurant and the like. Reference points can be manually specified by a user and/or another system and the like. For example, these points can be specific landmarks (e.g., a church, stadium, the old oak tree, etc.) and/or a user's preference for how they best can recall directions (e.g., use directions such as north, east, west, south of a landmark; only use relative directions such as left, right, up, down in relation to a reference point; and/or use only points previously known to a user, etc.). User preferences and/or reference point databases can also be sources of manually specified reference points.

Reference points can also be monetized by offering ranking and/or selection of the points based on their being sold to third parties interested in getting visibility for commercial purposes. The reference points can also be selected based on online activity (e.g., measured via geo-tagged images, 'hits' or how many times an image has been viewed or clicked (popularity) or geo-tagged comments) pertaining to a location. The online activity can be filtered based on a user's preferences and/or system preferences to include, but not limited to, a user's social network, business associations and/or areas of interests (e.g., clubs, forums, etc.) and the like. Weights can be given to the activity based on a user's relationship to a host of the image (e.g., the host of the image is a user's best friend so it has a higher weight than an image hosted by a distant cousin of the user, etc.) and/or a user's relationship with the image itself (e.g., a user likes baseball and the image is of a baseball stadium, etc.).

In one embodiment of the present principles, a user filters reference points based on their online friends. Images associated with their online friends can then be used to facilitate in the creation of a video preview and/or graphical preview of a route. In one instance of the embodiment, this allows at least one route to be constructed based on the images such that the route includes the most images possible while navigating the user from their departure point to their desired arrival point. The user can further filter the images, for example, to shorten the duration of the route if time is important. Likewise, the user can expand the inclusion of more images if time is not of the essence. These techniques allow, for example, the user to take a quick walk through a city and see as many interesting sites as possible while still arriving at their destination in a timely manner. The techniques also allow, for example, the user to take a longer walk through the city in order to see all or a subset of all of the related interesting sites while traveling to their destination.

The reference points can also be detected using automatic means such as, for example, a method that detects unusual events in videos based on an event dictionary and/or sparse coding. This can be applied to the video of route directions to detect relevant objects around the route. Reference points can also be obtained from a third party database. For example, the system could use a places application programming interface (API) from an online supplier to get relevant points of interest along the route and use these as reference points.

As a special case of reference points, the term *signage points* is used to refer to points where road signs indicating direction have been positioned by the road administration authority. This can also include other signs such as signs on paths and/or other off-road signs and the like. Similarly, it can include signs placed along public transportation and the like. These signage points can be detected automatically using, for example, image processing techniques. These types of techniques can include, but are not limited to, template-based detectors relying on histogram-of-gradients features and/or more advanced detectors based on deep convolutional networks and the like.

The term *action points* is used to refer to points were the route traveler needs to turn, switch lanes, merge, fork or otherwise take an action or make a direction-related decisions in order to successfully follow the specified route. Methods to select action points are widespread in existing GPS navigation technology.

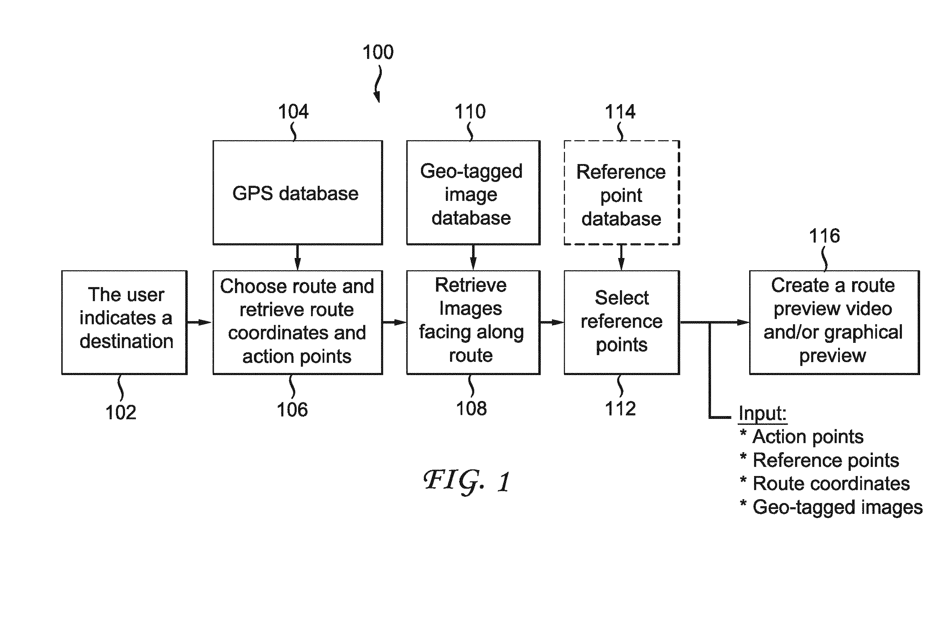

FIG. 1 illustrates a basic example process 100 for generating a preview representation such as a video preview and/or a graphical preview in accordance with an embodiment of the present principles. In this example process100, a preview video and/or graphical preview 116 is created based on images from, for example, a geo-tagged image database 110. A user uses a traditional GPS navigation interface to first indicate a destination 102. Using a GPS database 104, the process 100 chooses a route and outputs route coordinates and action points using GPS navigation techniques 106. The process 100 then automatically retrieves images in proximity of the route 108, such as, for example, street views facing along the chosen route, using a street view database 110 and the like. Subsequently, reference points are selected 112, for example, by reading them from a database of reference points 114 and/or computing them automatically using a spatiotemporal saliency or anomaly detector applied to a sequence of images. The selected images can be assembled into a video using video editing techniques 116 and presented to a user using variable playback speed. Similarly, the selected images can be used to generate graphical preview to quickly and easily aid a user in reviewing the route. The action points, reference points, route coordinates and/or other display characteristics can be displayed as overlays.

One display characteristic of a preview video is that the playback speed of the video is varied automatically: a faster playback speed is used for monotonous road segments without action or reference points and a slower playback speed is used around action and reference points. In this manner, the video duration is kept short without removing important information. In a similar manner, a cursor movement speed is varied to illustrate monotonous road segments by speeding up the curser movement and slowing it down around action and reference points and the like on the graphical route preview.

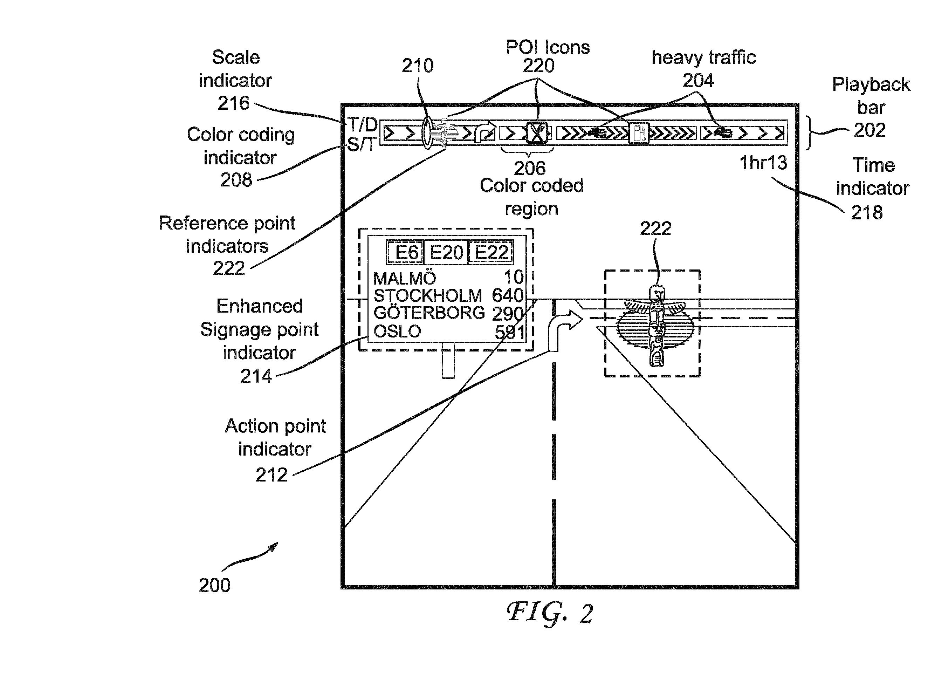

FIG. 2 illustrates an example of display characteristics 200 in accordance with an embodiment of the present principles. In one embodiment, the display characteristics 200 can include, but are not limited to, aspects illustrated in FIG. 2. For example, the following metadata can also be displayed and/or read out loud during playback:

Playback bar 202: The playback bar 202 is an example of a graphical route preview that facilitates in reducing the cognitive burden on a user when interfacing with a navigation device. It allows a user to quickly and easily assess a proposed route or routes and select the preferred route. Besides enabling a video navigation functionality via a cursor 210, the playback bar 202 is a schematic summary of a whole trip, indicating, for example, action and/or reference points and the like. The bar 202 can be color coded 206, for example, to indicate points such as an expected change in traffic, scenery, etc.. For example, gray can denote high-speed highways and/or blue can denote traffic-heavy cities. Heavy-traffic indicator icons 204 can also be overlaid on the playback bar 202. The bar 202 can also be color coded 206 to indicate a change in playback speed. For example, the whole bar can be gray except around action/reference points, were it can be blue. The bar 202 can also be color coded 206 to indicate changes in scenery. For example, forest regions can be green while sea-side regions can be blue. The color-coding indicator 208 is used to select/indicate the functionality of the color coding.

Cursor 210: Works as a video playback cursor. But unlike a standard cursor, it varies its speed to indicate segments where the playback is faster.

Action point indicators 212: Like a real-time GPS navigation system, a video indicates information relating to action points (lane switch, turns, road rings, etc.). These are also indicated on the playback bar 202.

Signage point indicators 214: Important signage points are highlighted for the user. To facilitate in teaching the route to a user, these signage points are further geometrically warped so that they face the user and are enhanced automatically to remove shadows, glare and/or visual noise.

Scale indicator 216: The scale of the playback back can denote either driving time or driving distance. This is indicated/selected using the scale indicator 216.

Time indicator 218: The time indicator 218 shows a total time of travel for a given route. The time can be influenced by the mode of transportation such as, for example, walking versus driving and the like.

POI Icons 220: The points of interest (POI) icons 220 can be placed on and/or in proximity of the playback bar 202 to easily illustrate where these points fall on a given route.

Reference point indicators 222: Important reference points are highlighted for the user. These are also indicated on the playback bar 202.

One skilled in the art can appreciate that the playback bar 202 can be shown independently of the example 200 shown in FIG. 2. In fact, several playback bars can be displayed to allow a user to easily select a route based on their preferences.

By utilizing the techniques of the present principles, a user can employ their GPS device and/or mobile device with GPS functionality to easily communicate directions to others. For example, when people stop a user on the road to ask for directions, now the user can give them a visual illustration of the route to follow. These techniques also allow a user to now avoid costly data charges while on the road (e.g., to download satellite imagery and/or a street view while on the road). The user can study the video/representation directions before leaving home/office using, for example, a fixed-cost home and/or office Wi-Fi and the like. This might be sufficient teaching of the route to even dispense of the need to bring along a navigation device. Otherwise, one can save the video/graphical preview directions in a navigation/mobile device and simply view them without the need to access mobile data. This is further useful when one is walking in densely urban areas, where a navigation device can have a hard time linking to a GPS satellite.

The user can also view the various proposed routes and select them based on scenery and/or frequency of close proximity to social network points of interest, service stations, restaurants, supermarkets and/or tourist attractions and the like. In addition, with other embodiments of the present principles, the created previews can be stored inside the navigation/mobile device for later access, and can be updated dynamically and/or at the user's request at any point during the route. In yet other embodiments of the present principles, a user can pause at any point during preview playback and look around using a synthetic 3D view.

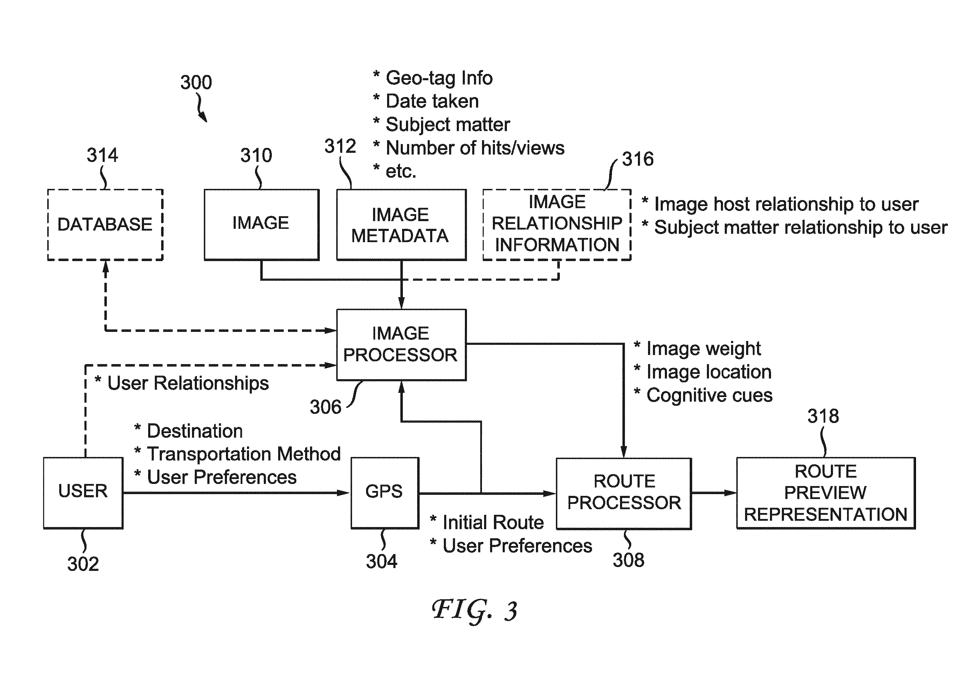

FIG. 3 depicts an example system 300 for generating a navigation route in accordance with an embodiment of the present principles. The components of the system 300 can reside locally and/or remotely. Similarly, processing functions can be combined and/or segregated to different degrees based on functionality, processing power and/or energy consumption and the like. A user 302 interacts with a navigation device such as, for example, a global positioning system 304 in order to find a route to a desired destination. The user 302 typically enters in a destination in the simplest scenario. However, if the GPS does not have current location information, the user 302 can also enter in a starting point as well. Most GPS devices also allow for user preferences. These can include, but are not limited to, items such as, for example, type of vehicle, toll road use, highway use, local road use, speed restrictions and/or day/night driving restrictions, fastest route, scenic route, etc. The GPS then generates an initial route to the user's desired destination. The initial route is then passed to an image processor 306 and to a route processor 308.

The image processor 306 includes, but is not limited to, a processor configured to accomplish at least a portion of the following functionality. The image processor 306 obtains at least one image 310 (e.g., drawings, photographs, videos, etc.) and associated image metadata 312 related to the initial route provided by the GPS. The image processor 306 can also obtain the image 310 and/or the image metadata 312 from an optional database 314 that can be local and/or remote. The image 310 and/or image metadata 312 can also be obtained by searching a global (e.g., the Internet, etc.) and/or a localized (e.g., an intranet, etc.) network and the like to extract images and/or metadata. The image metadata 312 can include, but is not limited to, geographically tagged ("geo-tag") image information (e.g., location in latitude/longitude, street address, city, state, zip code, province, country, etc.); information regarding when an image was taken and/or obtained which can include, for example, time and/or date (year, month, day, etc.); information regarding the subject matter of the image; information regarding how the image was obtained (e.g., camera settings, type of camera, video image, partial image of a larger image, etc.); information of where and/or from whom the image was sourced or received (e.g., who hosted the image on a network, etc. and/or who took the original image and/or who claims rights to the image and/or ownership of the image, etc.) and/or information regarding how often the image has been accessed, looked at, downloaded, clicked on and/or other indications of popularity of the image and the like.

In other embodiments, the image processor 306 can receive user relationships from the user 302 and/or from other sources like the GPS 304 or a network source such as a user's social network page and the like. The user relationships can include, but are not limited to, a user's social and/or business acquaintances and/or affiliations and/or further preferences such as hobbies, activities, etc. For example, the user 302 can provide family information and relationships and also state that they are a member of a car club (examples of 'user relationship information'). The image processor 306 can utilize this information in at least two ways. First, it can use it to establish an association or relationship with a person and/or group of people. Second, it can use it to establish an association or relationship with a business and/or activity and the like. The image processor 306 can thus utilize an 'entity' that can be a person or persons and/or a business and the like.

In one embodiment, the image processor 306 concludes, for example, that the user 302 has a best friend Joe and a brother Tom. This is an example of 'user relationship information' (information relating a user to another person or persons and/or business or other type of entity (club, etc.) and the like. The image processor 306 can determine this relationship from image relationship information 316 which can be obtained locally and/or remotely from a database and/or over a network and the like. Thus, the image relationship information 316 can include and/or be derived from user relationship information and the like. For example, the image relationship information 316 can be derived from the user's social network page and/or directly from the user 302 (user provided information related to the user's relationships with other entities) and the like.

As an example, assume the user 302 values Joe's opinion over Tom's. Images associated with Joe will then be given a higher weight over images associated with Tom. And images associated with Tom and Joe will be given a higher weight over an image from another host. This can be further enhanced by considering other relationships with the user 302. For example, the user 302 might be affiliated with a baseball team or has expressed an avid interest in baseball. The image processor 306 can give additional weight to images related to baseball activity. Thus, it can utilize different factors for weighting potential images to utilize. Therefore, although Tom's opinion is weighted less than Joe's, he has hosted images of a baseball stadium near the user's initial route. The image processor 306 can then use a form of weighting to compute a final weight in consideration of more than one user relationship.

In another embodiment, these weights can be computed automatically using machine learning methods. For example, the system can use images the user likes (e.g., as indicated by clicks and/or relationships, etc.) as a positive set of images and random images as a negative set. Features such as the colorimetry, or pixel gradients, or those derived from deep convolutional neural networks, can be computed from each image, and concatenated to metadata such as the image host identity (e.g., represented by an identifier). These concatenated features can then be used to build a binary classifier using existing methods. For example, a Support Vector Machine (SVM) classifier can be used. The resulting classifier can be applied to generic images from other hosts to determine a weight representing the user's preference for these images.

The image processor 306 can also utilize other factors related to potential images. These can include, but are not limited to, the date that the image was taken/drawn/filmed, etc. Old images can prove unreliable. A building can no longer be in existence and/or it might have been renovated to the point that it would be unrecognizable from the retrieved image. If more than one image is available of the same subject, the image processor 306 can obtain the most recent image to use. A lot of websites track how many times an image has been viewed/downloaded as 'hits' and/or 'clicks.' The number of hits/clicks can be construed as an indication of how popular an image can be ranked. This allows the image processor 306 to also include popularity when assessing whether or not to utilize an image.

In the simplest scenario, the image metadata 312 includes geo-tag information relating to the image 310. This allows the image processor 306 to find an image located along and/or within some distance of the initial route. However, in a more complex scenario, weighting of images can be introduced into the selection of the images. This can produce slightly and/or significantly altered routes if the image location is a significant distance from the initial route.

Once the image processor 306 has selected the images, it analyzes the images to determine cognitive cues from the selected images. Cues are indicators that prompt a user to do an action. Cognitive cues are cues that help a user to remember when to perform that action. Cognitive cues can be visual, auditory, and/or sensory and the like. For example, if an image shows a church, the image processor 306 can determine that the church steeple is a cognitive cue. Although steeples are not used as much for churches as they were in the past, the steeple has long been associated with churches and continues to be so. The image processor 306 can then pass this cognitive cue to the route processor 308 for further utilization in route determination. Often the cognitive cue will be flashed or color coded, etc. to call it to the attention of the user. This facilitates in the user remembering the action, or cue, associated with the cognitive cue.

In another embodiment, the image processor 306 could select an image of a mileage sign found commonly on the side of a highway. The image processor 306 can determine that it contains several different lines, each for mileage to a different city. Thus, each line can be considered a cognitive cue and passed to the route processor 308. Ultimately, only one line might be selected by the route processor 308 to be highlighted to the user 302 depending on a given route. In some other embodiments, the cognitive cue determined by the image processor 306 can be a geographical and/or topographical cognitive cue such as a river, a field and/or a mountain and the like. The cognitive cue information is passed to the route processor 308 to aid in generation of the route preview 318. In addition, the image processor 306 can pass the selected images, relationship information and/or metadata such as image weight and/or image location to the route processor 308 which facilitate in the generation of the route preview 318 as well.

The route processor 308 includes, but is not limited to, a processor configured to accomplish at least a portion of the following functionality. The route processor 308 uses the initial route and the information from the image processor 306 to generate a route preview representation 318. The representation 318 can be a route preview video and/or a graphical preview such as, for example, a playback bar and the like. The route processor 308 can generate more than one route preview representation 318. In the case of the route preview representation 318 being a graphical preview, the user 302 can be presented with, for example, a choice of multiple graphical previews from which the user 302 can select. In one instance, the route processor 308 can delay generating a route preview video until after a graphical preview is selected by the user 302. This reduces the processing power by eliminating the generation of extra route preview videos that the user 302 is not interested in.

The route processor 308 analyzes the image information to determine a possible route that can include highly weighted images and/or to determine how to represent the subject matter of the image. For example, the route processor 308 can limit a change in route variance to no more than 25 miles and include the highest weighted images along a first new route. It can also include lower weighted images that are conveniently located along the first new route. In a different example, the route processor 308 can determine that the highest weight total from the images can be obtained by a second new route that varies 32 miles from the initial route. Obviously if a route goes through or by all of the weighted images the total weighted value will be maximized but the route could take the user far out of the way. Thus, for practicality reasons, the route processor 308 can utilize restrictions such as maximum time the route can be extended and/or maximum distance the route can be extended and the like. These restrictions can be self-imposed and/or provided by a user and/or other system and the like. The restrictions can also take into account the mode of travel such as by public transport (variance limited by existing routes, time schedules, etc.), vehicle type (speed restrictions such as moped top speed limitations, etc.) and/or by foot (where distances take much longer to cover, etc.) and the like.

The route processor 308 can also determine how to graphically represent the subject matter of the image by analyzing the image itself (content derivation techniques, etc.), its metadata (name of image, host, etc.), its user relationship information and/or cognitive cues for the image. As the route processor 308 generates the route preview representation 318, it can utilize, for example, colors and/or image icons based on the cognitive cues to relay a routes contents to a user. For example, if a portion of a proposed route is a grassy flat area for 100 miles and the cognitive cue is a green field, this portion of the representation can be shown as a green portion on a playback bar and/or a flashing green field in an image utilized in a preview video. The flashing or other highlighting technique helps to draw a user's attention (increasing the user's cognitive function to remember why the image is important for navigation) to the fact that the significance of the image is the green field (and not the blue sky or other object that may also be shown in the image, etc.). If a mountain then occurs, an icon of a mountain can be placed at the end of the green portion of the playback bar to indicate to the user that the green area progresses to a mountainous area. Again, in a preview video, the mountain can be flashed and/or highlighted by color etc. to further draw the user's attention to the significance of the image used in the preview video.

Similarly, if a route goes by a sea, a blue portion can represent the portion of the route by the sea on the playback bar. An ocean sound (example of an auditory cognitive cue rather than a visual cue) can be utilized in a preview video when an image of the sea is utilized to help the user remember. A user can then quite easily determine which route they prefer and select that route. When the representation is presented to the user in a graphical form, the represented route information is almost instantaneously passed to the user. The user can glean information from the graphical representation (e.g., playback bar) without spending time watching a route simulation.

The route processor 308 can also generate different route preview representations 318 of route selections based on when the route is traveled. Different factors can affect the duration of a route and/or the selection of a route. The "when" can be a matter of minutes, hours, days, weeks, months or even years. In most practical instances, users are primarily concerned with traveling routes at different times of the day and/or different days of the weeks. Factors that affect route generation can be, for example, when certain points of interest represented by images are open and/or accessible to the user. A park, building and/or business might be closed in the evenings and weekends. Thus, the routes would be altered depending on the time of day and/or day of the week. Similarly, traffic patterns can change during the day and weekends. A major sporting event occurring on a weekend might affect generation of a route during the weekend that included a small pub next to the stadium, etc. The route preview representation 318 for the weekend can have the pub icon removed, easily showing the user that they would miss the pub if they take the route on the weekend.

The route processor 308 can also generate a route preview representation 318 as a preview video and the like. The route preview video can include, but is not limited to, a video preview of an image based route. The route preview video can include those route points that assist the user 302 in remembering the route. The route processor 308 generates points that aid in the lowering the cognitive burden of user as they navigate with or without a GPS. The route preview video includes cognitive signage and action points so that the route is easier for a user to remember. A blinking action of the point is performed when a navigation action is required. This calls the user's attention to the action and reinforces that they should remember it for proper navigation. In a similar fashion, if a long stretch of the route requires little cognitive thought, it can be dramatically shortened in the preview while highlighting the action points at the beginning and ending of the long stretch. This reminds the user that they need to be on the lookout for a particular signage, etc. while progressing through the long stretch of the route. By highlighting (through visual, sensory and/or audio cues, etc.) key aspects of the route, a user should be able to easily recall the route after viewing the route preview.

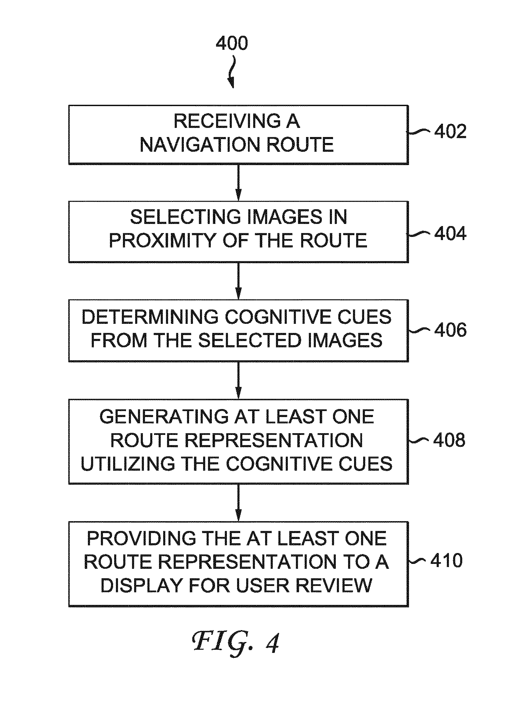

In view of the exemplary system shown and described above, methodologies that can be implemented in accordance with the embodiments will be better appreciated with reference to the flow chart of FIG. 4. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 4 is a flow diagram of an example method 400 of facilitating navigation by relaying route information to a user through the use of cognitive cues according to one embodiment of the present principles. The method 400 starts by receiving a navigation route 402. An initial navigation route can be received from a navigation device such as, for example, a global satellite system and the like. The GPS can be a standalone unit and/or the functionality can be embedded into another device such as a mobile device and the like. The initial route can be generated on the spot and/or generated at a previous time and stored in memory, etc. The initial route provides a seed route for the selection of images.

Images in proximity of the route are then selected 404. The selection of images can be as simplistic as selection based on geo-tags and as complex as utilizing relationship information as discussed above. Proximity limits can be set to limit which images are selected and/or the quantity of images used. For example, images could be limited to images within 25 miles of the initial route. Images can also be limited by quantity (e.g., only 15 images should be selected, etc.). Selection of images can also be limited based upon their 'value' or worth in relation to a particular user. This can be determined based on a weight given to the image. Determination of the weight can be based on subject matter of the image (e.g., user has expressed prior interest in subject matter, user has a friend who likes the subject matter, etc.), who hosted the image (relationship to user, social networking, etc.), date of the image (e.g., outdated, current, etc.), etc. Weighting can be averaged or based on a total sum and the like. Each factor used in the weighting can have a different value that is determined based on each user. For example, a user who is a baseball fanatic can have baseball related images given a higher weight value than a user who does not like baseball (e.g., a negative weight might be assigned for a user who hates a sport, etc.).

Cognitive cues are then determined from the selected images 406. For example, the cognitive cues can be derived from the subject matter of the images and/or derived from the location of the images on a route. In one scenario, an image of a forest can be processed and the cognitive cue can be a tree. The forest might be from the Sequoia National Forest so the cognitive cue could be a sequoia tree. It could also be a sensory cognitive cue such as the smell of a sequoia tree forest. In another scenario, the image could be of a cross roads with multiple possible routes. In this case, the cognitive cue could be a right turn, left turn or straight ahead. The cue itself could be accomplished by flashing, for example, the right turn portion of the crossroads and the like. Portions of signs can also be utilized as cognitive cues. Their shapes and text can be extracted, highlighted and emphasized to facilitate a user to remember the route.

At least one route representation is generated utilizing the cognitive cues 408. The route representation can be a graphical representation such as, for example, a playback bar and/or a preview video and the like. For example, if the route representation is a video preview, a cognitive cue such as text from a sign that indicates the mileage distance to several cities can be flashed or otherwise highlighted so that a user knows which particular line of text is important to remember. This allows the user to see the actual sign that they will encounter during the trip but also emphasizes why the sign is important for their route. One skilled in the art can appreciate that as a route changes, the cognitive cues will also change even for the same image. For example, a crossroads image might utilize a left turn cognitive cue for one route, but utilize a right turn cognitive cue for another route. The routes themselves can change based on a user's preferences and/or which images have been selected. Users can be presented with a choice of several route representations to choose from based on distance, points of interests, time of travel, etc.

The at least one route representation is provided to a display for user review 410. The route representations are shown to the user via a display to facilitate in playback and/or review of the routes. Displays can be visual, visual with auditory components, sensory (e.g., including Braille type display devices and the like) and/or purely auditory (e.g., including text reading functionality and the like). The user interface provided on the display can include a selection means for multiple route representations. This allows a user to select which route representation they prefer. A selection can activate a navigational device to proceed with that route, can activate a preview video to be generated for that selection and/or can activate a preview video to be played for that selection, etc.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations. Furthermore, to the extent that the term "includes" is used in either the detailed description or the claims, such term is intended to be inclusive in a manner similar to the term "comprising" as "comprising" is interpreted when employed as a transitional word.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, an optical disc (such as, for example, a CD also known as a compact disc and/or a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A system for route navigation, comprising:
means for receiving (306) at least one navigation route;
means for processing (306) at least one image and image metadata to select at least one image associated with the navigation route;
means for determining (306) at least one cognitive cue for navigation recall by a user for the at least one image;
means for generating (308) at least one navigation route representation including the at least one cognitive cue; and
means for providing (308) the at least one navigation route representation to a display.

2. The system of claim 1, wherein the means for processing further includes using user relationship information between a user and one selected from a group of an entity and a subject matter of the image.

3. The system of claim 2, wherein the user relationship information is derived from at least one selected from a group of a social network and a user preference.

4. The system of claim 1, wherein the means for processing further includes a means for determining a weight value for the at least one image.

5. The system of claim 1, wherein the image metadata includes at least one selected from the group of a number of selections of an image, a number of views of an image, a date of an image, location of an image and a subject matter of an image.

6. The system of claim 1, wherein the navigation route representation is one selected from the group of a graphical preview and a preview video.

7. The system of claim 1, wherein the navigation route representation includes at least one selected from the group of a visual cognitive cue, an auditory cognitive cue and a sensory cognitive cue.

8. A method for route navigation, comprising:
receiving a navigation route (402);
selecting at least one image in proximity of the route (404);
determining at least one cognitive cue from the at least one selected image (406);
generating at least one route representation using the at least one cognitive cue (408); and
providing the at least one route representation to a display for user preview (410).

9. The method of claim 8, selecting further includes using user relationship information between a user and one selected from a group of an entity and a subject matter of the image.

10. The method of claim 9, wherein the user relationship information is derived from at least one selected from a group of a social network and a user preference.

11. The method of claim 8, further comprising:
determining a weight value for the at least one selected image.

12. The method of claim 8, selecting further includes using image metadata for determining a selection, the metadata includes at least one selected from a group of a number of selections of an image, a number of views of an image, a date of an image, location of an image and a subject matter of an image.

13. The method of claim 8, wherein the navigation route representation is one selected from a group of a graphical preview and a preview video.

14. The method of claim 8, wherein the navigation route representation includes at least one selected from a group of a visual cognitive cue, an auditory cognitive cue and a sensory cognitive cue.

15. The method of claim 8, further comprising:
generating a video preview based on a selection of a graphical preview.
